# EUROPEAN PATENT SPECIFICATION

(11) **EP 4 212 716 B1**
(45) Date of publication and mention of the grant of the patent: **16.10.2024**
(21) Application number: 22212509.8
(22) Date of filing: 09.12.2022
(51) Int. Cl.: F02M 69/04, F02M 69/46, F02D 11/02, F02D 11/04, B62J 11/13, B62J 11/16, B62J 37/00, B62K 11/04, B62M 7/04

(54) **STRADDLED VEHICLE**
GRÄTSCHSITZFAHRZEUG
VÉHICULE À SELLE

(30) Priority: 13.01.2022 JP 2022003973; 28.09.2022 JP 2022155280
(43) Date of publication of application: 19.07.2023
(73) Proprietor: Yamaha Hatsudoki Kabushiki Kaisha, Iwata-shi, Shizuoka 438-8501 (JP)
(72) Inventor: Nguyenvan, Phu, Iwata-shi, Shizuoka (JP)
(74) Representative: Grünecker Patent- und Rechtsanwälte PartG mbB

(56) References cited:
- EP-A1- 1 304 283
- EP-A1- 2 905 210
- JP-A- 2015 227 623
- JP-A- 2020 019 358

## Description

The present invention relates to a straddled vehicle including a throttle valve and an injector.

As disclosed in JP 2015-148217 A, there has been known a straddled vehicle including a throttle valve disposed in an intake passage of an internal combustion engine and an injector that injects fuel. A throttle drum is coupled to the throttle valve. Two throttle cables are attached to the throttle drum. When one of the throttle cables is pulled, the throttle valve rotates to open, whereas when the other throttle cable is pulled, the throttle valve rotates to be closed. A fuel hose is connected to the injector.

In the straddled vehicle disclosed in JP 2015-148217 A, the injector is disposed relatively far from the throttle drum. The fuel hose extending from the injector and the two throttle cables extending from the throttle drum are less likely to interfere with each other. However, in a case where the injector is disposed relatively close to the throttle drum, the throttle cables might interfere routing of the fuel hose.

To avoid interference with the throttle cables, it is conceivable that the fuel hose is extended from the injector to pass above or below the throttle cables. However, if the fuel hose is extended in the manner described above from the injector near the throttle drum, the fuel hose might be bent sharply. In this case, a relatively heavy load might be applied to a portion of the fuel hose connected to the injector or the sharply bent portion of the fuel hose.

It is therefore an object of the present teaching to provide a straddled vehicle that can avoid interference between throttle cables and a fuel hose extending from an injector without a sharp bent of the fuel hose. According to the present invention said object is solved by a straddled vehicle having the features of independent claim 1. Preferred embodiments are laid down in the dependent claims.

A straddled vehicle disclosed here includes: an internal combustion engine; an injector attached to the internal combustion engine and configured to inject fuel; an intake passage connected to the internal combustion engine; a throttle valve disposed in the intake passage; a throttle drum connected to the throttle valve and configured to rotate together with the throttle valve; a first throttle cable connected to the throttle drum and configured to pull the throttle drum in a first direction; a second throttle cable connected to the throttle drum and configured to pull the throttle drum in a second direction that is opposite to the first direction; and a fuel hose connected to the injector. The fuel hose has an intersection portion passing between the first throttle cable and the second throttle cable.

In the straddled vehicle, since the intersection portion of the fuel hose passes between the first throttle cable and the second throttle cable, the fuel hose does not need to extend to pass above or below the throttle cables. Interference between the fuel hose and the throttle cables can be avoided without a sharp bent of the fuel hose extending from the injector.

In the straddled vehicle, since the fuel hose does not interfere with the throttle cables, the injector can be disposed near the throttle drum. The intersection portion of the fuel hose may be disposed rearward of either a front end of the injector or a front end of the throttle drum and forward of either a rear end of the injector or a rear end of the throttle drum.

A resin fuel hose has higher rigidity than a rubber fuel hose, and thus, is not easily bent. In the resin fuel hose, a load is likely to be applied to a connection portion with the injector and a bent portion, as compared to the rubber fuel hose. However, in the straddled vehicle, the fuel hose extending from the injector does not need to be bent sharply. Thus, a resin hose can be suitably used as a fuel hose. The fuel hose may be made of resin. Accordingly, costs for the fuel hose can be reduced.

Each of the first throttle cable and the second throttle cable may include a tube and an inner wire inserted in the tube and connected to the throttle drum. The fuel hose may have an outer diameter smaller than an outer diameter of the tube.

In the configuration described above, since the fuel hose is relatively thin, the intersection portion of the fuel hose can easily pass between the first throttle cable and the second throttle cable.

The intersection portion of the fuel hose may extend in a vehicle width direction in a vehicle plan view. In a vehicle side view, the intersection portion of the fuel hose may be disposed below the first throttle cable and above the second throttle cable.

The straddled vehicle may include a housing box having a bottom wall disposed above the internal combustion engine. The bottom wall of the housing box may have a portion located above the first throttle cable, the intersection portion of the fuel hose, and the second throttle cable and overlapping the first throttle cable, the intersection portion of the fuel hose, and the second throttle cable in a vehicle plan view.

In the configuration described above, the position of the bottom wall of the housing box can be lowered, as compared to a case where the fuel hose passes above the first throttle cable and the second throttle cable. Accordingly, the capacity of the housing box can be increased.

A portion of the second throttle cable may be disposed between the intersection portion of the fuel hose and a surface of the internal combustion engine.

In the configuration described above, as compared to a case where the fuel hose passes between the throttle cables and the internal combustion engine, the fuel hose can be disposed away from the internal combustion engine by a distance corresponding to the second throttle cable disposed between the fuel hose and the internal combustion engine. Accordingly, the fuel hose is less affected by heat of the internal combustion engine.

The throttle drum may be disposed rearward of the injector and outward of the injector in a vehicle width direction. The fuel hose may extend from the injector outward in the vehicle width direction. The first throttle cable and the second throttle cable may extend forward from the throttle drum.

The configuration described above enables the injector, the throttle drum, the fuel hose, and the throttle cables to be arranged compactly.

The straddled vehicle may include a holder fixed to the internal combustion engine and configured to hold a portion of the fuel hose. The holder may be disposed rearward of a front end of the injector, forward of a rear end of the throttle drum, and outward of the intersection portion of the fuel hose in the vehicle width direction.

The configuration described above enables the fuel hose to be supported stably with the injector, the throttle drum, and the fuel hose arranged compactly.

The straddled vehicle may include: a body frame; and a pivot shaft connecting the internal combustion engine to the body frame such that the internal combustion engine is swingable.

Since the injector is attached to the internal combustion engine and the fuel hose is connected to the injector, the fuel hose extending from the injector swings together with the internal combustion engine. However, in the straddled vehicle, the fuel hose extending from the injector does not need to be bent sharply. Thus, although the fuel hose swings together with the internal combustion engine, application of a heavy load to the fuel hose can be reduced.

### Advantages of Invention

The present teaching provides a straddled vehicle that can avoid interference between throttle cables and a fuel hose extending from an injector without a sharp bent of the fuel hose.

### BRIEF DESCRIPTION OF THE DRAWINGS

FIG. 1 is a left side view of a motorcycle according to a preferred embodiment.
FIG. 2 is a plan view of the motorcycle.
FIG. 3 is a partial left side view of the motorcycle.
FIG. 4 is a plan view of a portion of the motorcycle.
FIG. 5 is an enlarged plan view of a portion of the motorcycle.
FIG. 6 is an enlarged side view of a portion of the motorcycle.
FIG. 7 is a side view illustrating a throttle drum, a first throttle cable, and a second throttle cable.
FIG. 8 is an enlarged front view of a portion of the motorcycle.

### DESCRIPTION OF EMBODIMENTS

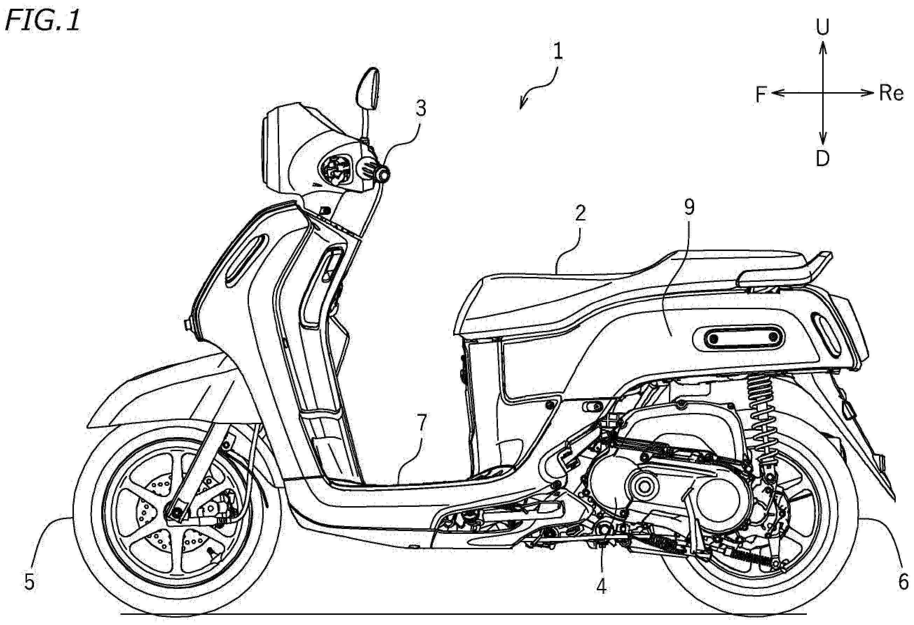

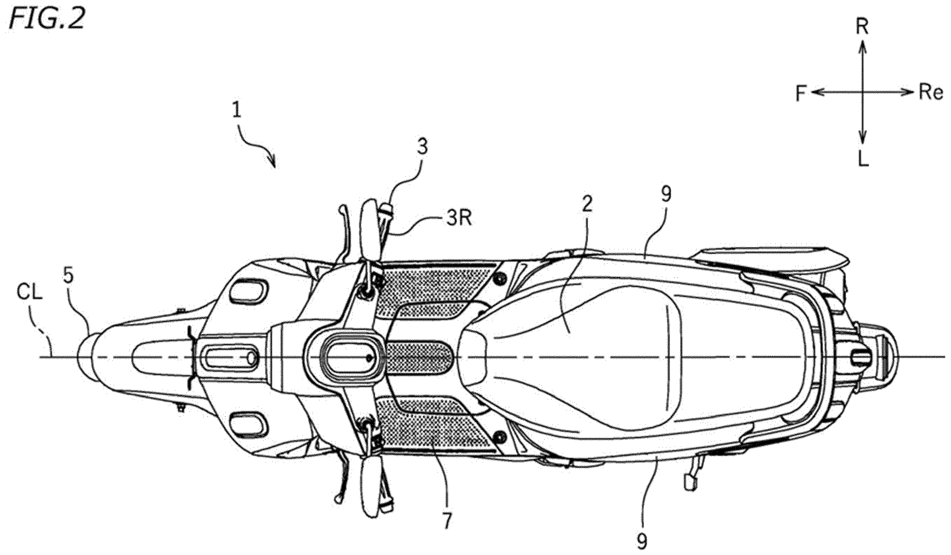

A preferred embodiment will be described hereinafter with reference to the drawings. FIG. 1 is a left side view of a motorcycle 1 as an example of a straddled vehicle. FIG. 2 is a plan view of the motorcycle 1. The motorcycle 1 described below is a scooter. It should be noted that the motorcycle 1 is not limited to the scooter.

Unless otherwise specified, front, rear, left, right, up, and down as used in the description below refer to front, rear, left, right, up, and down, respectively, as seen from an imaginary passenger sitting on a seat 2 in a case where the motorcycle 1 on which no passenger sits and no load is mounted is stationary in an upright position on a horizontal plane. Characters F, Re, L, R, U, and D in the drawings represent front, rear, left, right, up, and down, respectively.

Forward includes not only a direction extending horizontally forward along a vehicle center line CL but also a direction inclined from this forward direction at an angle less than 90 degrees, unless otherwise specified. Rearward includes not only a direction extending horizontally rearward along the vehicle center line CL but also a direction inclined from this rearward direction at an angle less than 90 degrees. The front-rear direction of the vehicle referrers to the indication F-Re in the figures. Leftward includes not only a direction extending horizontally leftward along a line orthogonal to the vehicle center line CL but also a direction inclined from this leftward direction at an angle less than 90 degrees. Rightward includes not only a direction extending horizontally rightward along the line orthogonal to the vehicle center line CL but also a direction inclined from this rightward direction at an angle less than 90 degrees. The left-right direction of the vehicle referrers to the indication L-R in the figures. Upward includes not only a direction extending upward along a vertical line but also a direction inclined from this upward direction at an angle less than 90 degrees. Downward includes not only a direction extending downward along the vertical line but also a direction inclined from this downward direction at an angle less than 90 degrees. The up-down direction of the vehicle referrers to the indication U-D in the figures.

As illustrated in FIG. 1, the motorcycle 1 includes a seat 2 on which a rider sits, a handlebar 3, an internal combustion engine (hereinafter referred to as an engine) 4, a front wheel 5, a rear wheel 6, a footrest 7, and a body cover 9. The seat 2 is disposed above and rearward of the footrest 7. As illustrated in FIG. 2, a rotatable accelerator grip 3R is disposed at the right of the handlebar 3.

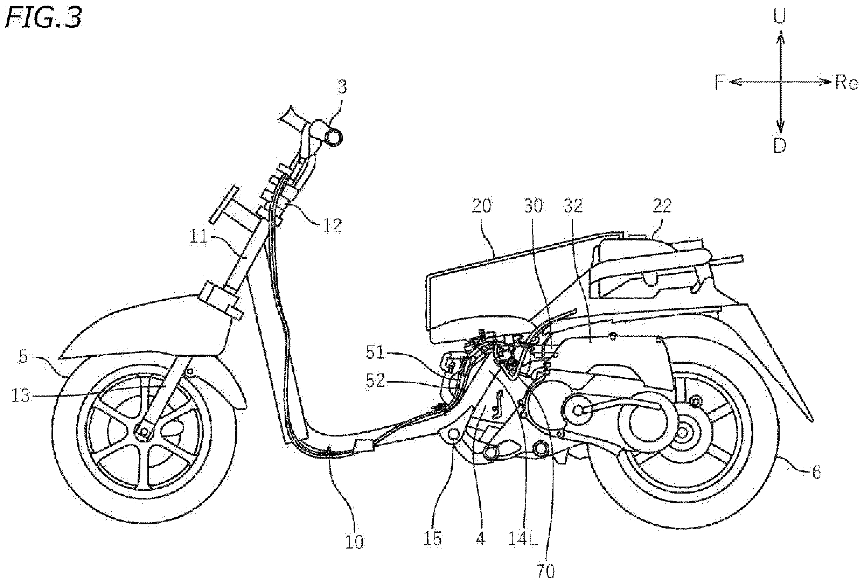

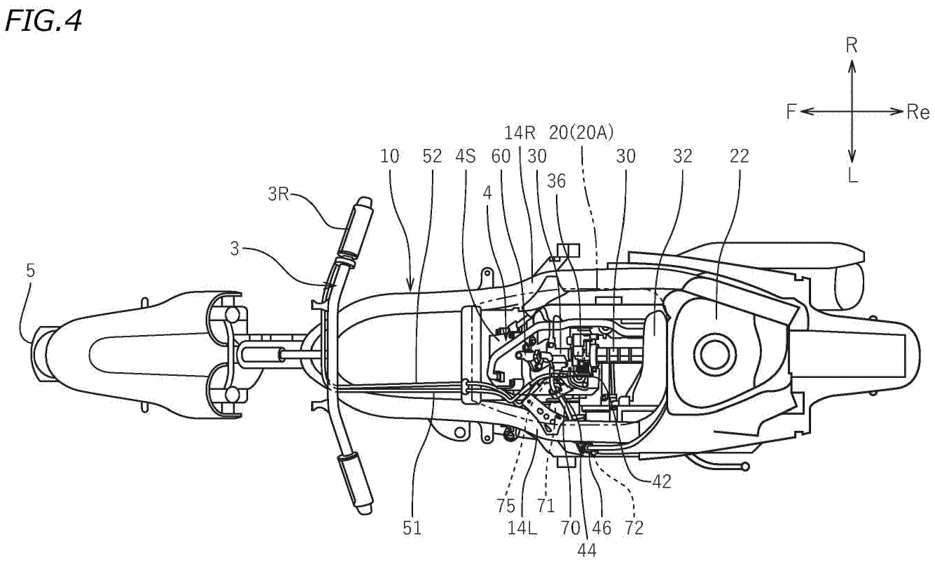

FIG. 3 is a partial left side view of the motorcycle 1. FIG. 4 is a plan view of a portion of the motorcycle 1. As illustrated in FIG. 3, the motorcycle 1 includes a body frame 10 having a head pipe 11. The head pipe 11 supports a steering shaft 12 such that the steering shaft 12 is rotatable leftward or rightward. The handlebar 3 is fixed to an upper portion of the steering shaft 12. A front fork 13 is connected to a lower portion of the steering shaft 12. A front wheel 5 is rotatably connected to a lower end portion of the front fork 13. The body frame 10 includes a left seat frame 14L extending rearward and a right seat frame 14R extending rearward (see FIG. 4).

The engine 4 is a so-called unit swing type engine. The engine 4 is coupled to the body frame 10 by a pivot shaft 15. The pivot shaft 15 extends in the vehicle left-right directions. The pivot shaft 15 swingably supports the engine 4. The engine 4 is swingable about the pivot shaft 15.

A housing box 20 is disposed above the engine 4. A fuel tank 22 is disposed rearward of the housing box 20. The fuel tank 22 is disposed above the rear wheel 6. The housing box 20 and the fuel tank 22 are disposed below the seat 2 (see FIG. 1).

As illustrated in FIG. 4, an intake pipe 30 is connected to the engine 4. The intake pipe 30 extends rearward from the engine 4. An air cleaner 32 is connected to the intake pipe 30. Air taken in the air cleaner 32 passes through the intake pipe 30, and then is supplied to a combustion chamber (not shown) in the engine 4.

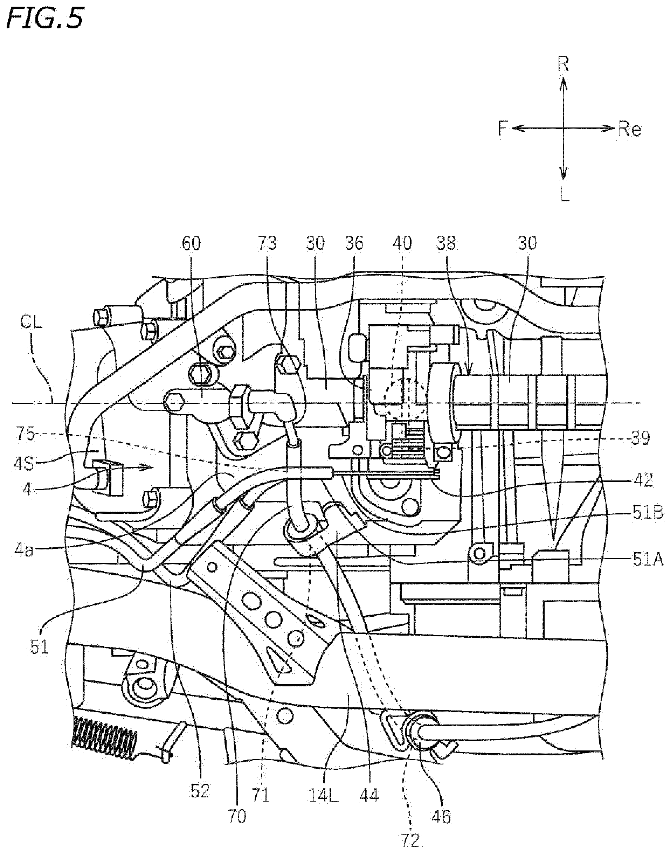

FIG. 5 is an enlarged plan view of a portion of the motorcycle 1. As illustrated in FIG. 5, the intake pipe 30 is provided with a throttle body 36. The intake pipe 30 and the throttle body 36 constitute an intake passage 38 for supplying air to the engine 4.

A throttle valve 40 is disposed in the throttle body 36. The throttle valve 40 is disposed in the intake passage 38 and controls a flow rate of air passing through the intake passage 38. The throttle valve 40 has a valve shaft 39. A throttle drum 42 is connected to the valve shaft 39. The throttle drum 42 is configured to rotate together with the throttle valve 40. When the throttle drum 42 rotates, the throttle valve 40 rotates.

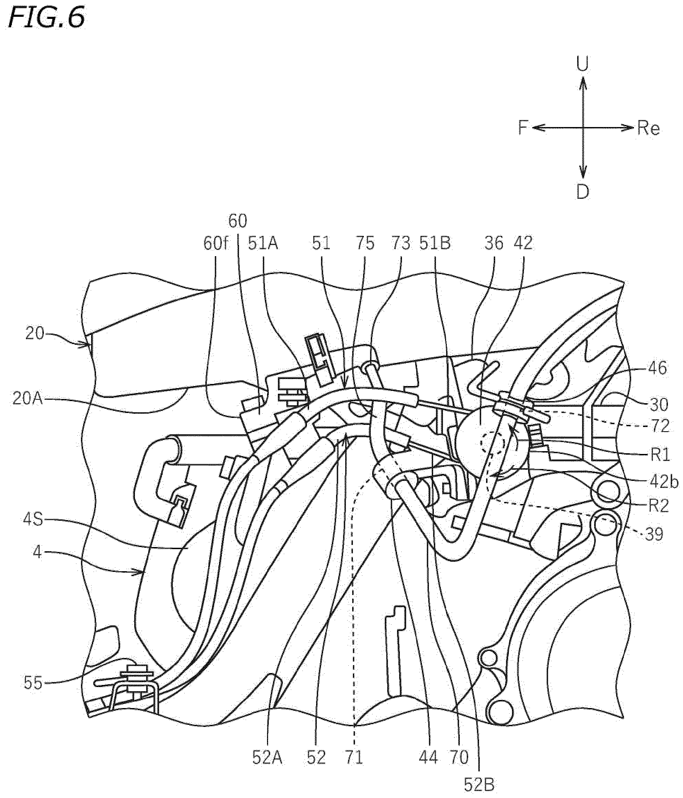

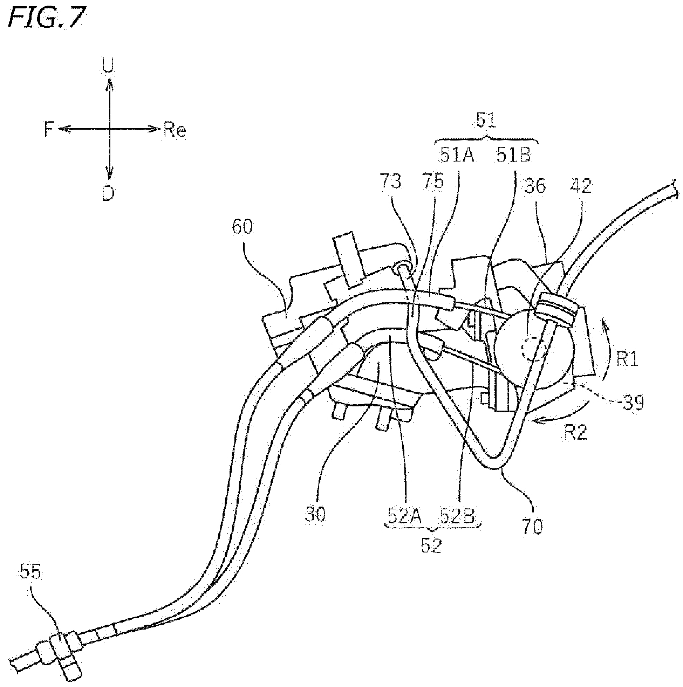

FIG. 6 is an enlarged side view of a portion of the motorcycle 1. As illustrated in FIG. 6, a first throttle cable 51 and a second throttle cable 52 are connected to the throttle drum 42. FIG. 7 is a side view illustrating the throttle drum 42, the first throttle cable 51, the second throttle cable 52, and so forth. The first throttle cable 51 includes a tube 51A and an inner wire 51B inserted in the tube 51A. The inner wire 51B is connected to the throttle drum 42. The second throttle cable 52 includes a tube 52A and an inner wire 52B inserted in the tube 52A. The inner wire 52B is connected to the throttle drum 42.

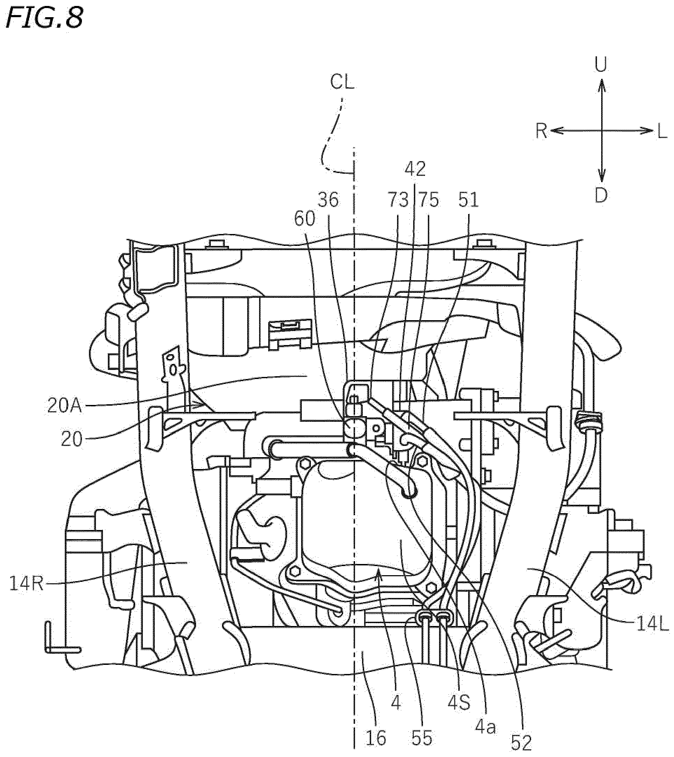

The first throttle cable 51 and the second throttle cable 52 extend forward from the throttle drum 42. In a region rearward of an injector 60 and forward of the throttle drum 42, the first throttle cable 51 is disposed above the second throttle cable 52. FIG. 8 is an enlarged front view of a portion of the motorcycle 1. As illustrated in FIG. 8, a cross member 16 extending in the vehicle left-right directions is connected to the left seat frame 14L and the right seat frame 14R. A holder 55 is fixed to the cross member 16. As illustrated in FIG. 6, the holder 55 is disposed forward of the injector 60 and the throttle drum 42. A portion of the first throttle cable 51 and a portion of the second throttle cable 52 are held by the holder 55.

As illustrated in FIGS. 6 and 7, the throttle drum 42 is rotatable in a first direction R1 and in a second direction R2. The second direction R2 is opposite to the first direction R1. In FIGS. 6 and 7, the first direction R1 is a counterclockwise direction, and the second direction R2 is a clockwise direction. In this preferred embodiment, the first direction R1 is a direction in which the throttle valve 40 is opened, and the second direction R2 is a direction in which the throttle valve 40 is closed. That is, when the throttle drum 42 rotates in the first direction R1, the opening degree of the throttle valve 40 increases. When the throttle drum 42 rotates in the second direction R2, the opening degree of the throttle valve 40 decreases.

In this preferred embodiment, the first throttle cable 51 is a cable for operating the throttle drum 42 in the direction in which the throttle valve 40 is opened. The first throttle cable 51 is set to pull the throttle drum 42 in the first direction R1. When the inner wire 51 B of the first throttle cable 51 is pulled, the throttle drum 42 rotates in the first direction R1, and the opening degree of the throttle valve 40 increases. The second throttle cable 52 is a cable for operating the throttle drum 42 in the direction in which the throttle valve 40 is closed. The second throttle cable 52 is set to pull the throttle drum 42 in the second direction R2. When the inner wire 52B of the second throttle cable 52 is pulled, the throttle drum 42 rotates in the second direction R2, and the opening degree of the throttle valve 40 decreases.

As illustrated in FIG. 4, the first throttle cable 51 and the second throttle cable 52 are connected to the accelerator grip 3R. When a rider operates the accelerator grip 3R, the inner wire 51B of the first throttle cable 51 or the inner wire 52B of the second throttle cable 52 is pulled so that and the throttle drum 42 rotates in the first direction R1 or in the second direction R2. Accordingly, the opening degree of the throttle valve 40 is adjusted.

As illustrated in FIGS. 5 and 6, the injector 60 for injecting fuel is attached to the engine 4. Although the injector 60 may be directly attached to the engine 4, the injector 60 is indirectly attached to the engine 4 through the intake pipe 30 in this preferred embodiment. In the preferred embodiment, the injector 60 is attached to the intake pipe 30 downstream of the throttle body 36 (see FIG. 7).

A fuel hose 70 is connected to the injector 60. The fuel hose 70 couples the fuel tank 22 (see FIG. 3) to the injector 60. In this preferred embodiment, a front end portion of the fuel hose 70 is connected to the injector 60, and a rear end portion of the fuel hose 70 is connected to the fuel tank 22. Specifically, a fuel pump (not shown) is disposed in the fuel tank 22, and the rear end portion of the fuel hose 70 is connected to the fuel pump. Fuel in the fuel tank 22 is supplied to the injector 60 through the fuel hose 70.

A material for the fuel hose 70 is not specifically limited, and in this preferred embodiment, the fuel hose 70 is made of resin. A portion or whole of the fuel hose 70 is made of a resin material. As a material included in the fuel hose 70, polyamide (PA) is preferably used, for example.

The size of the fuel hose 70 is not specifically limited, and in this preferred embodiment, the outer diameter of the fuel hose 70 is smaller than the outer diameter of the tube 51A of the first throttle cable 51. The outer diameter of the fuel hose 70 is smaller than the outer diameter of the tube 52A of the second throttle cable 52.

As illustrated in FIG. 5, the holder 44 is fixed to the engine 4. The holder 44 is disposed outward of the throttle drum 42 in a vehicle width direction. The expression "outward in the vehicle width direction" refers to a direction away from the vehicle center line CL. Inward in the vehicle width direction refers to a direction toward the vehicle center line CL. As illustrated in FIG. 6, the holder 44 is disposed rearward of a front end 60f of the injector 60 and forward of a rear end 42b of the throttle drum 42. A portion of the fuel hose 70 is held by the holder 44. A portion of the fuel hose 70 held by the holder 44 will be hereinafter referred to as a first held portion 71.

As illustrated in FIG. 5, the holder 46 is fixed to a seat frame 14L. The holder 46 is disposed outward of the holder 44 in the vehicle width direction. The holder 46 is disposed rearward of the holder 44. Another portion of the fuel hose 70 is held by the holder 46. A portion of the fuel hose 70 held by the holder 46 will be hereinafter referred to as a second held portion 72.

As illustrated in FIG. 5, the fuel hose 70 extends outward in the vehicle width direction from a connection portion 73 connected to the injector 60 to the first held portion 71. The fuel hose 70 extends outward in the vehicle width direction from the first held portion 71 to the second held portion 72. As illustrated in FIG. 4, the fuel hose 70 extends rearward from the second held portion 72 to the fuel tank 22.

As illustrated in FIG. 6, the throttle drum 42 is disposed rearward of the injector 60. As illustrated in FIG. 5, the throttle drum 42 is disposed outward of the injector 60 in the vehicle width direction. The fuel hose 70 extends outward from the injector 60 in the vehicle width direction. Specifically, a portion of the fuel hose 70 from the connection portion 73 connected to the injector 60 to the first held portion 71 extends outward in the vehicle width direction. In this preferred embodiment, the fuel hose 70 extends leftward from the injector 60. On the other hand, the first throttle cable 51 and the second throttle cable 52 extend forward from the throttle drum 42. Thus, in a vehicle plan view, the fuel hose 70 intersect with the throttle cables 51 and 52.

In this preferred embodiment, it is conceivable to extend the fuel hose 70 from the injector 60 such that the fuel hose 70 passes above or below the throttle cables 51 and 52 in order to prevent the throttle cables 51 and 52 from interfering with the fuel hose 70. However, if the fuel hose 70 is to be disposed in the manner described above, a portion of the fuel hose 70 from the connection portion 73 to the first held portion 71 needs to be bent sharply upward or downward. In this case, a heavy load might be applied to the connection portion 73 of the fuel hose 70. A heavy load might also be applied to the sharply bent portion of the fuel hose 70. In particular, since a resin hose has higher rigidity than a rubber hose, the resin hose is not easily bent. If the fuel hose 70 is made of resin, when the fuel hose 70 is sharply bent, a heavy load might be applied.

On the other hand, in this preferred embodiment, as illustrated in FIG. 6, the fuel hose 70 extending from the injector 60 passes between the first throttle cable 51 and the second throttle cable 52. A portion of the fuel hose 70 between the connection portion 73 and the first held portion 71 passes between the first throttle cable 51 and the second throttle cable 52 and extends outward in the vehicle width direction.

The fuel hose 70 has an intersection portion 75 passing between the first throttle cable 51 and the second throttle cable 52. As illustrated in FIG. 5, in a vehicle plan view, the intersection portion 75 of the fuel hose 70 extends in the vehicle width directions. The vehicle width direction refers to a vehicle left-right direction. As illustrated in FIG. 6, in a vehicle side view, the intersection portion 75 of the fuel hose 70 is disposed below the first throttle cable 51 and above the second throttle cable 52. In this preferred embodiment, the intersection portion 75 of the fuel hose 70 is disposed below the tube 51A of the first throttle cable 51 and above the tube 52A of the second throttle cable 52. The intersection portion 75 of the fuel hose 70 may be in contact with one or both of the tube 51A and the tube 52A, or may be separated from one or both of the tube 51A and the tube 52A.

In this preferred embodiment, the fuel hose 70 intersects with the throttle cables 51 and 52 near the injector 60 and the throttle drum 42. The intersection portion 75 of the fuel hose 70 is located near the injector 60 and the throttle drum 42. As illustrated in FIG. 6, the intersection portion 75 of the fuel hose 70 is located rearward of the front end 60f of the injector 60 and forward of the rear end 42b of the throttle drum 42. As illustrated in FIG. 5, the intersection portion 75 of the fuel hose 70 is located outward of the connection portion 73 of the fuel hose 70 in the vehicle width direction and inward of the first held portion 71 in the vehicle width direction. The holder 44 is disposed outward of the intersection portion 75 of the fuel hose 70 in the vehicle width direction.

As illustrated in FIG. 5, in a vehicle plan view, the intersection portion 75 of the fuel hose 70 overlaps a cylinder head 4S of the engine 4. As illustrated in FIG. 8, the intersection portion 75 of the fuel hose 70 is located inward in the vehicle width direction of the outer end of the cylinder head 4S in the vehicle width direction. In this preferred embodiment, the intersection portion 75 of the fuel hose 70 is located rightward of the left end of the cylinder head 4S.

As illustrated in FIG. 8, the cylinder head 4S of the engine 4 has an upper surface 4a. A portion of the second throttle cable 52 is disposed between the intersection portion 75 of the fuel hose 70 and the upper surface 4a of the engine 4.

As illustrated in FIG. 6, the housing box 20 has a bottom wall 20A disposed above the engine 4. At least a portion of the bottom wall 20A of the housing box 20 is located above the first throttle cable 51, the intersection portion 75 of the fuel hose 70, and the second throttle cable 52. As illustrated in FIG. 4, in a vehicle plan view, a portion of the bottom wall 20A of the housing box 20 overlaps the first throttle cable 51, the intersection portion 75 of the fuel hose 70, and the second throttle cable 52. That is, the bottom wall 20A of the housing box 20 has a portion located directly above the first throttle cable 51, the intersection portion 75 of the fuel hose 70, and the second throttle cable 52.

The configuration of the motorcycle 1 according to this preferred embodiment has been described above. Next, advantages given by the motorcycle 1 will be described.

In the motorcycle 1 according to this preferred embodiment, the fuel hose 70 has the intersection portion 75 passing between the first throttle cable 51 and the second throttle cable 52. Since the intersection portion 75 of the fuel hose 70 passes between the first throttle cable 51 and the second throttle cable 52, the fuel hose 70 extending from the injector 60 does not need to be bent sharply to pass above or below the throttle cables 51 and 52. In this preferred embodiment, interference of the fuel hose 70 with the throttle cables 51 and 52 can be avoided without a sharp bent of the fuel hose 70 extending from the injector 60. Since the fuel hose 70 does not need to be bent sharply, it is possible to avoid application of a heavy load to the fuel hose 70.

In this preferred embodiment, the intersection portion 75 of the fuel hose 70 is disposed rearward of the front end 60f of the injector 60 and forward of the rear end 42b of the throttle drum 42. The intersection portion 75 of the fuel hose 70 is disposed near the injector 60 and the throttle drum 42. In this preferred embodiment, the fuel hose 70 intersects with the throttle cables 51 and 52 near the injector 60 and the throttle drum 42, but the fuel hose 70 does not need to be bent sharply. Since the fuel hose 70 and the throttle cables 51 and 52 do not interfere with each other, the injector 60 can be easily disposed near the throttle drum 42.

The fuel hose 70 may be made of rubber, but is made of resin in this preferred embodiment. Costs for the fuel hose 70 can be reduced. A resin hose has higher rigidity than a rubber hose, and thus, is not easily bent. However, in this preferred embodiment, since the fuel hose 70 does not need to be bent sharply, the resin fuel hose 70 can be suitably used.

In this preferred embodiment, the outer diameter of the fuel hose 70 is smaller than the outside diameters of the tubes 51A and 52A of the throttle cables 51 and 52. Since the fuel hose 70 is relatively thin, the fuel hose 70 can easily pass between the first throttle cable 51 and the second throttle cable 52.

In this preferred embodiment, the bottom wall 20A of the housing box 20 has a portion located directly above the first throttle cable 51, the intersection portion 75 of the fuel hose 70, and the second throttle cable 52. That is, the bottom wall 20A of the housing box 20 has a portion located above the first throttle cable 51, the intersection portion 75 of the fuel hose 70, and the second throttle cable 52 and, in a vehicle plan view, overlapping the first throttle cable 51, the intersection portion 75 of the fuel hose 70, and the second throttle cable 52. In this preferred embodiment, the intersection portion 75 of the fuel hose 70 is located below the first throttle cable 51. Thus, as compared to a case where the intersection portion 75 of the fuel hose 70 is located above the first throttle cable 51, the position of the bottom wall 20A of the housing box 20 can be lowered. That is, as compared to a case where the fuel hose 70 passes above the throttle cables 51 and 52, the position of the bottom wall 20A of the housing box 20 can be lowered. Thus, the dimension of the housing box 20 in the top-bottom direction can be reduced so that the capacity of the housing box 20 can be thereby enlarged.

In this preferred embodiment, since the intersection portion 75 of the fuel hose 70 is disposed between the first throttle cable 51 and the second throttle cable 52, a portion of the second throttle cable 52 is disposed between the intersection portion 75 and the upper surface 4a of the cylinder head 4S of the engine 4. As compared to a case where the fuel hose 70 passes below the throttle cables 51 and 52 (i.e., the fuel hose 70 passes between the throttle cables 51 and 52 and the upper surface 4S of the cylinder head 4S), the fuel hose 70 can be located away from the cylinder head 4S. Thus, the fuel hose 70 can be less affected by heat of the engine 4.

In this preferred embodiment, the throttle drum 42 is disposed rearward of the injector 60 and outward of the injector 60 in the vehicle width direction. The fuel hose 70 extends from the injector 60 outward in the vehicle width direction. The first throttle cable 51 and the second throttle cable 52 extend forward from the throttle drum 42. By employing such arrangement, the injector 60, the throttle drum 42, the fuel hose 70, and the throttle cables 51 and 52 can be arranged compactly.

In this preferred embodiment, the first held portion 71 of the fuel hose 70 is supported by the holder 44 fixed to the engine 4. The holder 44 is disposed rearward of the front end 60f of the injector 60, forward of the rear end 42b of the throttle drum 42, and outward of the intersection portion 75 of the fuel hose 70 in the vehicle width direction. The fuel hose 70 can be supported stably with the injector 60, the throttle drum 42, and the fuel hose 70 arranged compactly.

In this preferred embodiment, the engine 4 is a unit swing type engine. The engine 4 is swingably connected to the body frame 10 by the pivot shaft 15. The injector 60 and the throttle drum 42 swing together with the engine 4. A portion of the fuel hose 70 extending from the injector 60 also swings together with the engine 4. Specifically, a portion of the fuel hose 70 between the connection portion 73 connected to the injector 60 and the second held portion 72 supported by the holder 46 fixed to the left seat frame 14L swings together with the engine 4. However, in this preferred embodiment, this portion of the fuel hose 70 does not need to be bent sharply. Accordingly, although the portion of the fuel hose 70 described above swings together with the engine 4, application of a heavy load to this portion can be reduced.

The foregoing description has been directed to one preferred embodiment. However, the above preferred embodiment is merely an example, and other various preferred embodiments may be made. Next, other embodiments will be briefly described.

In the preferred embodiment, the first throttle cable 51 and the second throttle cable 52 are cables for operating the throttle drum 42 in a direction in which the throttle valve 40 is opened and a direction in which the throttle valve 40 is closed, respectively. Alternatively, the first throttle cable 51 and the second throttle cable 52 may be cables for operating the throttle drum 42 in the direction in which the throttle valve 40 is closed and the direction in which the throttle valve 40 is opened, respectively.

Arrangement of the injector 60 and the throttle drum 42 is not specifically limited. For example, the throttle drum 42 may be disposed inward of the injector 60 in the vehicle width direction. The throttle drum 42 may be disposed rightward of the injector 60. The throttle drum 42 may be disposed forward of the injector 60. In this case, the intersection portion 75 of the fuel hose 70 may be disposed rearward of the front end of the throttle drum 42 and forward of the rear end of the injector 60.

In the preferred embodiment, as illustrated in FIG. 3, the fuel tank 22 is disposed rearward of the housing box 20. The fuel tank 22 is disposed above the rear wheel 6. However, the position of the fuel tank 22 is not specifically limited. For example, the fuel tank 22 may be disposed below the footrest 7 (see FIG. 1). The fuel tank 22 may be disposed below the housing box 20 or may be disposed forward of the rear wheel 6.

The intersection portion 75 of the fuel hose 70 may be disposed forward of the front end of the injector 60 and the front end of the throttle drum 42. The intersection portion 75 of the fuel hose 70 may be disposed rearward of the rear end of the injector 60 and the rear end of the throttle drum 42.

The fuel hose 70 may not be made of resin. The fuel hose 70 may be made of rubber. A material for the fuel hose 70 is not specifically limited.

The outer diameter of the fuel hose 70 may be equal to the outer diameters of the tubes 51A and 52A of the throttle cables 51 and 52, or may be larger than the outer diameters of the tubes 51A and 52A of the throttle cables 51 and 52.

The outer diameter of the fuel hose 70 may not be uniform. The outer diameters of the tubes 51A and 52A of the throttle cables 51 and 52 may not be uniform. In the case whether the outer diameter of the fuel hose 70 or the tubes 51A and 52A of the throttle cables 51 and 52 is not uniform, the outer diameter of the intersection portion 75 of the fuel hose 70 is preferably smaller than the outer diameter of portions of the tubes 51A and 52A overlapping the intersection portion 75 in a vehicle plan view.

The intersection portion 75 of the fuel hose 70 may not extend in the vehicle width direction in a vehicle plan view. The intersection portion 75 of the fuel hose 70 may not be disposed below the first throttle cable 51 and may not be disposed above the second throttle cable 52 in a vehicle side view.

The bottom wall 20A of the housing box 20 may not have the portion located directly above the first throttle cable 51, the intersection portion 75 of the fuel hose 70, and the second throttle cable 52.

A portion of the second throttle cable 52 may not be disposed between the intersection portion 75 of the fuel hose 70 and the upper surface 4a of the engine 4.

The throttle drum 42 may be disposed forward of the injector 60, and may be disposed inward of the injector 60 in the vehicle width direction. The fuel hose 70 may not extend outward from the injector 60 in the vehicle width direction. The first throttle cable 51 and the second throttle cable 52 may not extend forward from the throttle drum 42.

The position and number of holders that hold the fuel hose 70 are not specifically limited. The position and number of holders that hold the first throttle cable 51 and the second throttle cable 52 are not specifically limited, either.

The engine 4 is not limited to a unit swing type engine. The engine 4 may be non-swingably fixed to the body frame 10. The motorcycle 1 is not limited to a scooter.

The straddled vehicle refers to a vehicle on which a passenger is to be astride. The straddled vehicle is not limited to the motorcycle 1. The straddled vehicle may be a tricycle, an all terrain vehicle (ATV), or a snowmobile, for example.

### DESCRIPTION OF REFERENCE CHARACTERS

1 motorcycle (straddled vehicle), 4 internal combustion engine, 10 body frame, 15 pivot shaft, 20 housing box, 20A bottom wall, 22 fuel tank, 30 intake pipe, 36 throttle body, 38 intake passage, 40 throttle valve, 42 throttle drum, 44 holder, 51 first throttle cable, 51A tube, 51B inner wire, 52 second throttle cable, 52A tube, 52B inner wire, 60 injector, 70 fuel hose, 75 intersection portion

## Claims

1. A straddled vehicle (1) comprising:
an internal combustion engine (4);
an injector (60) attached to the internal combustion engine (4) and configured to inject fuel;
an intake passage (38) connected to the internal combustion engine (4);
a throttle valve (40) disposed in the intake passage (38);
a throttle drum (42) connected to the throttle valve (40) and configured to rotate together with the throttle valve (40);
a first throttle cable (51) connected to the throttle drum (42) and configured to pull the throttle drum (42) in a first direction;
a second throttle cable (52) connected to the throttle drum (42) and configured to pull the throttle drum (42) in a second direction that is opposite to the first direction; and
a fuel hose (70) connected to the injector (60), the straddled vehicle being **characterised in that** the fuel hose (70) has an intersection portion (75) passing between the first throttle cable (51) and the second throttle cable (52).

2. The straddled vehicle (1) according to claim 1, wherein the intersection portion (75) of the fuel hose (70) is disposed rearward of either a front end of the injector (60) or a front end of the throttle drum (42) and disposed forward of either a rear end of the injector (60) or a rear end of the throttle drum (42) with regard to a front-rear direction of the vehicle.

3. The straddled vehicle (1) according to claim 1 or 2, wherein the fuel hose (70) is made of resin.

4. The straddled vehicle (1) according to any one of claims 1 to 3, wherein each of the first throttle cable (51) and the second throttle cable (52) includes a tube (51A, 52A) and an inner wire (51B, 52B) inserted in the tube (51A, 52A) and connected to the throttle drum (42), and
the fuel hose (70) has an outer diameter smaller than an outer diameter of the tube (51A, 52A).

5. The straddled vehicle (1) according to any one of claims 1 to 4, wherein the intersection portion (75) of the fuel hose (70) extends in a vehicle width direction with regard to a left-right direction of the vehicle in a vehicle plan view, and
in a vehicle side view, the intersection portion (75) of the fuel hose (70) is disposed below the first throttle cable (51) and above the second throttle cable (52) with regard to an up-down direction of the vehicle.

6. The straddled vehicle (1) according to claim 5, further comprising:
a housing box (20) having a bottom wall (20A) disposed above the internal combustion engine (4) with regard to the up-down direction of the vehicle, wherein
the bottom wall (20A) of the housing box (20) has a portion located above the first throttle cable (51), the intersection portion (75) of the fuel hose (70), and the second throttle cable (52) with regard to the up-down direction of the vehicle and overlapping the first throttle cable (51), the intersection portion (75) of the fuel hose (70), and the second throttle cable (52) in a vehicle plan view.

7. The straddled vehicle (1) according to claim 6, wherein the housing box (20) is overlapping the internal combustion engine (4) in the vehicle plan view.

8. The straddled vehicle (1) according to claim 6 or 7, further comprising:
a fuel tank (22) disposed rearward of the housing box (20) with regard to a front-rear direction of the vehicle.

9. The straddled vehicle (1) according to claim 8, further comprising:
a rear wheel (6), wherein the fuel tank (22) is disposed above the rear wheel (6) with regard to the up-down direction of the vehicle.

10. The straddled vehicle (1) according to claim 8 or 9, further comprising:
a seat (2), wherein the housing box (20) and the fuel tank (22) are disposed below the seat (2) with regard to the up-down direction of the vehicle.

11. The straddled vehicle (1) according to claim 10, wherein the seat (2) is overlapping the internal combustion engine (4) in the vehicle plan view.

12. The straddled vehicle (1) according to any one of claims 5 to 11, wherein a portion of the second throttle cable (52) is disposed between the intersection portion (75) of the fuel hose (70) and a surface of the internal combustion engine (4).

13. The straddled vehicle (1) according to any one of claims 1 to 12, wherein the throttle drum (42) is disposed rearward of the injector (60) with regard to a front-rear direction of the vehicle and outward of the injector (60) in a vehicle width direction with regard to the left-right direction of the vehicle,
the fuel hose (70) extends from the injector (60) outward in the vehicle width direction with regard to the left-right direction of the vehicle, and
the first throttle cable (51) and the second throttle cable (52) extend forward from the throttle drum (42) with regard to a front-rear direction of the vehicle.

14. The straddled vehicle (1) according to claim 13, further comprising:
a holder (44) fixed to the internal combustion engine (4) and configured to hold a portion of the fuel hose (70), wherein
the holder (44) is disposed rearward of a front end of the injector (60), forward of a rear end of the throttle drum (42) with regard to a front-rear direction of the vehicle, and outward of the intersection portion (75) of the fuel hose (70) in the vehicle width direction with regard to the left-right direction of the vehicle.

15. The straddled vehicle (1) according to any one of claims 1 to 14, further comprising:
a body frame (10); and
a pivot shaft (15) connecting the internal combustion engine (4) to the body frame (10) such that the internal combustion engine (4) is swingable.

## Patentansprüche

1. Ein Spreiz-Sitz-Fahrzeug (1), das umfasst:
einen Verbrennungsmotor (4);
eine Einspritzdüse (60), die an dem Verbrennungsmotor (4) angebracht und zum Einspritzen von Kraftstoff konfiguriert ist;
einen Einlasskanal (38), der mit dem Verbrennungsmotor (4) verbunden ist;
ein Drosselventil (40), das in dem Einlasskanal (38) angeordnet ist;
eine Drosseltrommel (42), die mit dem Drosselventil (40) verbunden und konfiguriert ist,
um zusammen mit dem Drosselventil (40) zu drehen;
ein erstes Drosselkabel (51), das mit der Drosseltrommel (42) verbunden und konfiguriert ist, um die Drosseltrommel (42) in eine erste Richtung zu ziehen;
ein zweites Drosselkabel (52), das mit der Drosseltrommel (42) verbunden ist und konfiguriert ist, um die Drosseltrommel (42) in eine zweite Richtung zu ziehen, die der ersten Richtung entgegengesetzt ist; und
einen Kraftstoffschlauch (70), der mit der Einspritzdüse (60) verbunden ist, das Spreiz-Sitz-Fahrzeug ist **dadurch gekennzeichnet, dass**
der Kraftstoffschlauch (70) einen Kreuzungsabschnitt (75) hat, der zwischen dem ersten Drosselkabel (51) und dem zweiten Drosselkabel (52) verläuft.

2. Das Spreiz-Sitz-Fahrzeug (1) gemäß Anspruch 1, wobei der Kreuzungsabschnitt (75) des Kraftstoffschlauchs (70) hinter entweder einem vorderen Ende der Einspritzdüse (60) oder einem vorderen Ende der Drosseltrommel (42) und vor entweder einem hinteren Ende der Einspritzdüse (60) oder einem hinteren Ende der Drosseltrommel (42) in Bezug auf eine Vorwärts-Rückwärts-Richtung des Fahrzeugs angeordnet ist.

3. Das Spreiz-Sitz-Fahrzeug (1) gemäß Anspruch 1 oder 2, wobei der Kraftstoffschlauch (70) aus Harz hergestellt ist.

4. Das Spreiz-Sitz-Fahrzeug (1) gemäß irgendeinem der Ansprüche 1 bis 3, wobei jedes, das erste Drosselkabel (51) und das zweite Drosselkabel (52) ein Rohr (51A, 52A) und einen Innendraht (51B, 52B), der in das Rohr (51A, 52A) eingeführt und mit der Drosseltrommel (42) verbundenen ist, enthält, und
der Kraftstoffschlauch (70) einen Außendurchmesser hat, der kleiner ist als der Außendurchmesser des Rohrs (51A, 52A).

5. Das Spreiz-Sitz-Fahrzeug (1) gemäß irgendeinem der Ansprüche 1 bis 4, wobei sich der Kreuzungsabschnitt (75) des Kraftstoffschlauchs (70) in einer Fahrzeugbreitenrichtung in Bezug auf eine Links-Rechts-Richtung des Fahrzeugs in einer Fahrzeugdraufsicht erstreckt, und
in einer Fahrzeugseitenansicht der Kreuzungsabschnitt (75) des Kraftstoffschlauchs (70) unterhalb des ersten Drosselkabels (51) und oberhalb des zweiten Drosselkabels (52) in Bezug auf eine Aufwärts-Abwärts-Richtung des Fahrzeugs angeordnet ist.

6. Das Spreiz-Sitz-Fahrzeug (1) gemäß Anspruch 5, das weiter umfasst:
einen Gehäusekasten (20) mit einer Bodenwand (20A), die in Bezug auf die Aufwärts-Abwärts-Richtung des Fahrzeugs oberhalb des Verbrennungsmotors (4) angeordnet ist, wobei
die Bodenwand (20A) des Gehäusekastens (20) einen Abschnitt aufweist, der sich über dem ersten Drosselkabel (51), dem Kreuzungsabschnitt (75) des Kraftstoffschlauchs (70) und dem zweiten Drosselkabel (52) in Bezug auf die Aufwärts-Abwärts-Richtung des Fahrzeugs befindet und das erste Drosselkabel (51), den Kreuzungsabschnitt (75) des Kraftstoffschlauchs (70) und das zweite Drosselkabel (52) in einer Fahrzeugdraufsicht überlappt.

7. Das Spreiz-Sitz-Fahrzeug (1) gemäß Anspruch 6, wobei der Gehäusekasten (20) den Verbrennungsmotor (4) in der Fahrzeugdraufsicht überlappt.

8. Das Spreiz-Sitz-Fahrzeug (1) gemäß Anspruch 6 oder 7, das weiter umfasst:
einen Kraftstofftank (22), der in Bezug auf eine Vorwärts-Rückwärts-Richtung des Fahrzeugs hinter dem Gehäusekasten (20) angeordnet ist.

9. Das Spreiz-Sitz-Fahrzeug (1) gemäß Anspruch 8, das weiter umfasst:
ein Hinterrad (6), wobei der Kraftstofftank (22) in Bezug auf die Aufwärts-Abwärts-Richtung des Fahrzeugs oberhalb des Hinterrads (6) angeordnet ist.

10. Das Spreiz-Sitz-Fahrzeug (1) gemäß Anspruch 8 oder 9, das weiter umfasst:
einen Sitz (2), wobei der Gehäusekasten (20) und der Kraftstofftank (22) in Bezug auf die Aufwärts-Abwärts-Richtung des Fahrzeugs unterhalb des Sitzes (2) angeordnet sind.

11. Das Spreiz-Sitz-Fahrzeug (1) gemäß Anspruch 10, wobei der Sitz (2) den Verbrennungsmotor (4) in der Draufsicht des Fahrzeugs überlappt.

12. Das Spreiz-Sitz-Fahrzeug (1) gemäß irgendeinem der Ansprüche 5 bis 11, wobei ein Abschnitt des zweiten Drosselkabels (52) zwischen dem Kreuzungsabschnitt (75) des Kraftstoffschlauches (70) und einer Oberfläche des Verbrennungsmotors (4) angeordnet ist.

13. Das Spreiz-Sitz-Fahrzeug (1) gemäß irgendeinem der Ansprüche 1 bis 12, wobei die Drosseltrommel (42) in Bezug auf eine Vorwärts-Rückwärts-Richtung des Fahrzeugs hinter der Einspritzdüse (60) und in Bezug auf die Links-Rechts-Richtung des Fahrzeugs in einer Fahrzeugbreitenrichtung außerhalb der Einspritzdüse (60) angeordnet ist,
sich der Kraftstoffschlauch (70) von der Einspritzdüse (60) in Richtung der Fahrzeugbreite in Bezug auf die Links-Rechts-Richtung des Fahrzeugs nach außen erstreckt, und
das erste Drosselkabel (51) und das zweite Drosselkabel (52) sich von der Drosseltrommel (42) in Bezug auf eine Vorwärts-Rückwärts-Richtung des Fahrzeugs nach vorne erstrecken.

14. Das Spreiz-Sitz-Fahrzeug (1) gemäß Anspruch 13, das weiter umfasst:
einen Halter (44), der am Verbrennungsmotor (4) befestigt und konfiguriert ist, um einen Abschnitt des Kraftstoffschlauchs (70) zu halten, wobei
der Halter (44) hinter einem vorderen Ende der Einspritzdüse (60), vor einem hinteren Ende der Drosseltrommel (42) in Bezug auf eine Vorwärts-Rückwärts-Richtung des Fahrzeugs und außerhalb des Kreuzungsbereichs (75) des Kraftstoffschlauchs (70) in der Fahrzeugbreitenrichtung in Bezug auf die Links-Rechts-Richtung des Fahrzeugs angeordnet ist.

15. Das Spreiz-Sitz-Fahrzeug (1) gemäß irgendeinem der Ansprüche 1 bis 14, das weiter umfasst:
einen Körperrahmen (10); und
eine Schwenkwelle (15), die den Verbrennungsmotor (4) mit dem Körperrahmen (10) verbindet, so dass der Verbrennungsmotor (4) schwenkbar ist.

## Revendications

1. Véhicule à enfourcher (1), comprenant :
un moteur à combustion interne (4) ;
un injecteur (60) attaché au moteur à combustion interne (4) et configuré pour injecter du carburant ;
un passage d'admission (38) connecté au moteur à combustion interne (4) ;
un boîtier papillon (40) disposé dans le passage d'admission (38) ;
un tambour d'accélérateur (42) connecté au boîtier papillon (40) et configuré pour tourner conjointement au boîtier papillon (40) ;
un premier câble d'accélérateur (51) connecté au tambour d'accélérateur (42) et configuré pour tirer le tambour d'accélérateur (42) dans une première direction ;
un deuxième câble d'accélérateur (52) connecté au tambour d'accélérateur (42) et configuré pour tirer le tambour d'accélérateur (42) dans une deuxième direction opposée à la première direction ; et
un tuyau à carburant (70) connecté à l'injecteur (60),
le véhicule à enfourcher étant **caractérisé en ce que** le tuyau à carburant (70) comporte une portion d'intersection (75) passant entre le premier câble d'accélérateur (51) et le deuxième câble d'accélérateur (52) .

2. Véhicule à enfourcher (1) selon la revendication 1, dans lequel la portion d'intersection (75) du tuyau à carburant (70) est disposée à l'arrière soit d'une extrémité avant de l'injecteur (60), soit d'une extrémité avant du tambour d'accélérateur (42), et est disposée à l'avant soit d'une extrémité arrière de l'injecteur (60), soit d'une extrémité arrière du tambour d'accélérateur (42) par rapport à la direction avant-arrière du véhicule.

3. Véhicule à enfourcher (1) selon la revendication 1 ou 2, dans lequel le tuyau à carburant (70) est constitué de résine.

4. Véhicule à enfourcher (1) selon l'une quelconque des revendications 1 à 3, dans lequel
chacun câble parmi le premier câble d'accélérateur (51) et le deuxième câble d'accélérateur (52) comporte un tube (51A, 52A) et un fil interne (51B, 52B) inséré dans le tube (51A, 52A) et connecté au tambour d'accélérateur (42), et
le tuyau à carburant (70) présente un diamètre externe inférieur à un diamètre externe du tube (51A, 52A).

5. Véhicule à enfourcher (1) selon l'une quelconque des revendications 1 à 4, dans lequel
la portion d'intersection (75) du tuyau à carburant (70) s'étend en direction de la largeur du véhicule par rapport à une direction gauche-droite du véhicule dans une vue en plan du véhicule, et
dans une vue latérale du véhicule, la portion d'intersection (75) du tuyau à carburant (70) est disposée au-dessous du premier câble d'accélérateur (51) et au-dessus du deuxième câble d'accélérateur (52) par rapport à la direction haut-bas du véhicule.

6. Véhicule à enfourcher (1) selon la revendication 5, comprenant en outre :
un boîtier (20) comportant une paroi de fond (20A) disposée au-dessus du moteur à combustion interne (4) par rapport à la direction haut-bas du véhicule, dans lequel
la paroi de fond (20A) du boîtier (20) comporte une portion située au-dessus du premier câble d'accélérateur (51), de la portion d'intersection (75) du tuyau à carburant (70) et du deuxième câble d'accélérateur (52) par rapport à la direction haut-bas du véhicule, et chevauchant le premier câble d'accélérateur (51), la portion d'intersection (75) du tuyau à carburant (70) et le deuxième câble d'accélérateur (52) dans une vue en plan du véhicule.

7. Véhicule à enfourcher (1) selon la revendication 6, dans lequel le boîtier (20) chevauche le moteur à combustion interne (4) dans la vue en plan du véhicule.

8. Véhicule à enfourcher (1) selon la revendication 6 ou 7, comprenant en outre :
un réservoir de carburant (22) disposé à l'arrière du boîtier (20) par rapport à la direction avant-arrière du véhicule.

9. Véhicule à enfourcher (1) selon la revendication 8, comprenant en outre :
une roue arrière (6), dans lequel le réservoir de carburant (22) est disposé au-dessus de la roue arrière (6) par rapport à la direction haut-bas du véhicule.

10. Véhicule à enfourcher (1) selon la revendication 8 ou 9, comprenant en outre :
un siège (2), dans lequel le boîtier (20) et le réservoir de carburant (22) sont disposés au-dessous du siège (2) par rapport à la direction haut-bas du véhicule.

11. Véhicule à enfourcher (1) selon la revendication 10, dans lequel le siège (2) chevauche le moteur à combustion interne (4) dans la vue en plan du véhicule.

12. Véhicule à enfourcher (1) selon l'une quelconque des revendications 5 à 11, dans lequel une portion du deuxième câble d'accélérateur (52) est disposée entre la portion d'intersection (75) du tuyau à carburant (70) et une surface du moteur à combustion interne (4).

13. Véhicule à enfourcher (1) selon l'une quelconque des revendications 1 à 12, dans lequel
le tambour d'accélérateur (42) est disposé à l'arrière de l'injecteur (60) par rapport à une direction avant-arrière du véhicule et à l'extérieur de l'injecteur (60) en direction de la largeur du véhicule par rapport à la direction gauche-droite du véhicule,
le tuyau à carburant (70) s'étend depuis l'injecteur (60) vers l'extérieur en direction de la largeur du véhicule par rapport à la direction gauche-droite du véhicule, et
le premier câble d'accélérateur (51) et le deuxième câble d'accélérateur (52) s'étendent vers l'avant à partir du tambour d'accélérateur (42) par rapport à la direction avant-arrière du véhicule.

14. Véhicule à enfourcher (1) selon la revendication 13, comprenant en outre :
un support (44) fixé au moteur à combustion interne (4) et configuré pour supporter une portion du tuyau à carburant (70), dans lequel
le support (44) est disposé à l'arrière d'une extrémité avant de l'injecteur (60), à l'avant d'une extrémité arrière du tambour d'accélérateur (42) par rapport à la direction avant-arrière du véhicule, et à l'extérieur de la portion d'intersection (75) du tuyau à carburant (70) en direction de la largeur du véhicule par rapport à la direction gauche-droite du véhicule.

15. Véhicule à enfourcher (1) selon l'une quelconque des revendications 1 à 14, comprenant en outre :
un cadre (10) ; et
un arbre de pivot (15) connectant le moteur à combustion interne (4) au cadre (10) de telle sorte que le moteur à combustion interne (4) soit pivotant.
